# EUROPÄISCHE PATENTANMELDUNG

(11) **EP 0 673 976 A2**
(43) Veröffentlichungstag der Anmeldung: **27.09.1995**
(21) Anmeldenummer: 95103580.7
(22) Anmeldetag: 13.03.1995
(51) Int. Cl.: C08L 83/04, C08G 77/50, C08F 299/08, B29C 49/00

(54) **Verfahren zur Herstellung von Formteilen und Hohlkörpern aus Silicon-Kautschuk**

(30) Priorität: 25.03.1994 DE 4410419
(71) Anmelder: BAYER AG, 51368 Leverkusen (DE)
(72) Erfinder: Friemann, Hans, Dr., D-50769 Köln (DE); Mrozek, Alfons, Dipl.-Ing., D-51381 Leverkusen (DE); Littek, Wolfram, Dipl.-Ing., D-50937 Köln (DE)

(57) **Zusammenfassung**

Verfahren zur Herstellung von Hohlkörpern oder Formteilen mit starken Hinterschnitten das folgende nacheinander ablaufende Schritte umfaßt, wie Herstellung des Vorformlings, Überführung des Vorformlings in eine Form zur Festlegung der Geometrie, Formgebung des Formkörpers durch Anpressen oder gegebenenfalls Ansaugen des Vorformlings an die Form durch Gasdruck und Vulkanisation unter Einsatz eines Kunststoffs.

## Beschreibung

Die Erfindung betrifft ein Verfahren zur Herstellung von Hohlkörpern oder Formteilen mit starken Hinterschnitten, das folgende nacheinander ablaufende Schritte umfaßt: Herstellung des Vorformlings, Überführung des Vorformlings in eine Form zur Festlegung der Geometrie, Formgebung des Formkörpers durch Anpressen oder gegebenenfalls Ansaugen des Vorformlings an die Form durch Gasdruck und Vulkanisation, unter Einsatz eines Kunststoffs.

Für die Herstellung von Elastomerteilen aus Siliconkautschuk sind für die Formgebung folgende Verfahren bekannt: Extrusion, Formpressen, Spritzgießen und Kalandrieren. Nach diesen genannten Verfahren können jedoch weder Hohlkörper noch Formteile mit starken Hinterschnitten, wie z.B. komplizierte Faltenbälge, hergestellt werden. Bei Hohlkörper scheitern diese Verfahren an der Tatsache, daß die für die Schaffung eines Hohlraumes eingeführten Füllkörper nachträglich nicht zu entfernen sind, ohne daß aufgrund der erforderlichen hohen Dehnung des Artikels Risse entstehen.

Bei der Herstellung von Formteilen mit starken Hinterschnitten besteht, z.B. bei dem Spritzgußverfahren, die Gefahr des nur unzureichenden Befüllens der Form.

Daher gibt es bislang in der Silicon-Verarbeitungstechnik bei der Herstellung von Hohlkörpern oder Formteilen mit starken Hinterschnitten keine Alternative zur Verklebung entsprechend geformter Halbschalen oder Formteile.

Als verklebende Masse werden dabei unter Einfluß von Luftfeuchtigkeit härtende Siliconkautschuk-Einkomponenten oder Zweikomponenten-Systeme, die bevorzugt unter Hitzeeinwirkung aushärten, verwendet. Bei der Herstellung eines Hohlkörpers wird daher die Klebefläche der einen Halbschale nach dieser Methode mit der verklebenden Masse versehen, die andere Halbschale aufgedrückt und bis zur Aushärtung der Verbindungsmasse fixiert. Dieses Verfahren ist aufwendig und führt an den Klebenähten zu Schwachstellen.

Wie in DE-OS 27 17 365 beschrieben, hat sich in der Thermoplast-Verarbeitung die Blasformtechnik zur Herstellung von Hohlkörpern bewahrt.

Dabei wird ein Vorformling aus geschmolzenem Thermoplast mit Druckluft an die Wand einer kalten Form gepreßt, in der sich die Schmelze verfestigt. Der Hohlkörper kann anschließend nach Öffnen der Form entnommen werden.

Es bestand aufgrund der überlegenen Eigenschaften der Silicone, wie z.B. Hitze-, Alterungs- und Witterungsbeständigkeit sowie Flexibilität bei tiefen Temperaturen, der Bedarf, Hohlkörper sowie Formteile mit starken Hinterschnitten auf Silicon-Basis herzustellen.

Aufgabe der vorliegenden Erfindung war daher die Bereitstellung von Verfahren zur Herstellung von Hohlkörpern oder Formteilen, insbesondere Hohlkörpern, mit starken Hinterschnitten, unter Einsatz von Siliconen.

Es gelang diese Formteile auf Silicon-Basis, dadurch herzustellen, daß die genaue Anpassung an die Form bzw. die Strukturunterlage entweder mittels Überdruck auf der formabgewandten Seite oder mittels Unterdruck auf der formzugewandten Seite in der Form oder Strukturunerlage erfolgte.

Gegenstand der vorliegenden Erfindung sind Verfahren zur Herstellung von Hohlkörpern oder Formteilen mit starken Hinterschnitten aus Kunststoff, die folgende nacheinander ablaufende Schritte umfaßen; Herstellung eines Vorformlings, Überführen des Vorformlings in eine Form zur Festlegung der Geometrie, Formgebung des Formkörpers durch Anpressen oder gegebenenfalls Ansaugen des Vorformlings an die Form durch Gasdruck und Vulkanisation, wobei als Kunststoff ein Siliconkautschuk eingesetzt wird.

In dem erfindungsgemäßen Verfahren wird als Siliconkautschuk vorzugsweise peroxidisch oder additionsvernetzender Siliconkautschuk eingesetzt, der bevorzugt eine Mooney Viscosität von 30-130 bei 20°C, besonders bevorzugt 55 bis 130 Pas, gemessen mit einem Scherscheiben-Viscosimeter nach Mooney (DIN 53 523), aufweist.

In einer Ausführungsform der vorliegenden Erfindung wird als Siliconkautschuk vorzugsweise ein peroxidisch, vernetzender Siliconkautschuk, mit einer Mooney-Viskosität von 30-130 bei 20°C, enthaltend
A) 100 Teile eines Silicon-Polymeren oder eines Gemisches aus mehreren Silicon-Polymeren der allgemeinen Formel 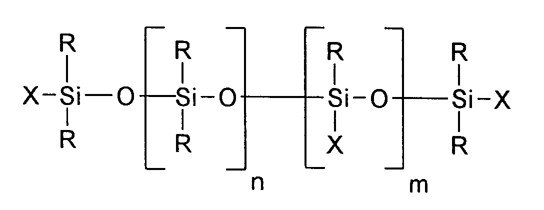 mit R = C₁-C₈-Alkyl, C₅-C₈-Cycloalkyl, C₆-C₁₄-Aryl, wobei die Reste R gleich oder verschieden sein können, X die Bedeutung von R oder eines Alkenylrestes mit 2 bis 6 C-Atomen hat, mit einer Viskosität von 10 bis 1 000 000 Pa·s, wobei mindestens 2 Alkenylgruppen im Molekül vorhanden sind,
B) 20 bis 200 Teile eines verstärkenden Füllstoffes oder eines Gemisches aus mehreren verstärkenden Füllstoffen, vorzugsweise pyrogene oder gefällte Kieselsäure mit einer spezifischen Oberfläche von 50-380 m²/g,
C) 0,1 bis 7 Teilen eines organischen Peroxids, wie z.B. Bis(2,4-dichlorbenzoyl)peroxid, Bis(4-methylbenzoyl)peroxid, Bis(chlorbenzoyl)-peroxid, Dicumylperoxid, Dibenzoylperoxid, 2,5-Dimethyl-2,5-di-tert.-butyl(peroxy)hexan oder Gemischen daraus,
D) 0 bis 100 Teilen eines nicht verstärkenden Füllstoffes oder eines Gemisches aus mehreren nicht verstärkenden Füllstoffen, wie Quarzmehl oder Diatomeenerde, und gegebenenfalls farbgebenden Pigmenten, einsetzt.

In einer weiteren Ausführungsform der vorliegenden Erfindung wird als Siliconkautschuk, vorzugsweise ein additionsvernetzender Siliconkautschuk mit einer Mooney-Viskosität von 30 bis 130 bei 20°C, enthaltend
A) 100 Teile eines Silicon-Polymeren oder eines Gemisches aus mehreren Silicon-Polymeren der allgemeinen Formel 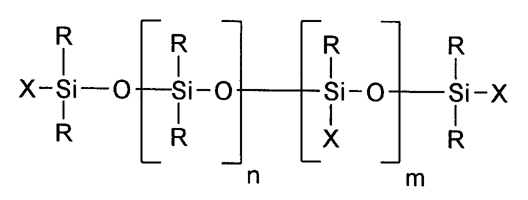 mit R = C₁-C₈-Alkyl, C₅-C₈-Cycloalkyl, C₆-c₁₄-Aryl, wobei die Reste R gleich oder verschieden sein können, X die Bedeutung von R oder eines Alkenylrestes mit 2 bis 6 C-Atomen hat, mit einer Viskosität von 10 bis 1 000 000 Pa·s, wobei mindestens 2 Alkenylgruppen im Molekül vorhanden sind,
B) 20 bis 200 Teile eines verstärkenden Füllstoffes oder eines Gemisches aus mehreren verstärkenden Füllstoffen, vorzugsweise pyrogene oder gefällte Kieselsäure mit einer spezifischen Oberfläche von 50-380 m²/g,
C') 0,1 bis 30 Teilen eines Si-H-Gruppen-haltigen Vernetzers der allgemeinen Formel 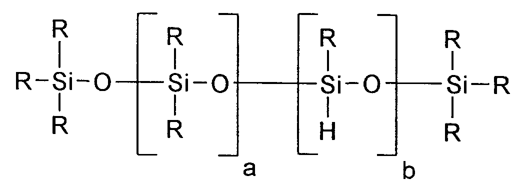 mit R = C₁-C₈-Alkyl, C₂-C₈Cycloalkyl, C₆-C₁₄-Aryl, C₂-C₈-Alkenyl, wobei die Reste R gleich oder verschieden sein können,
   a zwischen 0 und 400; b zwischen 3 und 400 liegt,
   einen Edelmetallkatalysator, vorzugsweise elementares Platin oder Platinverbindungen, besonders bevorzugt ein aktiver Platin-Komplex, wobei die Konzentration, bezogen auf die Summe aller Komponenten, 1 bis 100 ppm beträgt,
   0,001 bis 1,0 Teilen eines Inhibitors, der die katalysierte Addition der Si-H-Gruppen an die Alkylengruppen des Siliconpolymers bei Raumtemperatur, aber nicht bei höheren Temperaturen, verhindert, vorzugsweise 1-Ethinylcyclohexanol-1 oder 3-Methyl-butin-(1)-ol-3
D) 0 bis 100 Teilen eines nicht verstärkenden Füllstoffes oder eines Gemisches aus mehreren nicht verstärkenden Füllstoffen, wie Quarzmehl oder Diatomeenerde, und gegebenenfalls farbgebenden Pigmenten, einsetzt.

Zur Verbesserung der Verteilung des Füllstoffes im Polysiloxan können Hilfsmittel eingesetzt werden, vorzugsweise niedermolekulare Organosilicium-Verbindungen mit Hydroxylgruppen oder anderen reaktiven Gruppen, die mit den Hydroxylgruppen aus der Kieselsäure reagieren können.

In einer Ausführungsform der erfindungsgemäßen Herstellung von Hohlkörpern bzw. Hohlkörpern mit starken Hinterschnitten werden die Komponenten A bis D innig vermengt, zu einem schlauchförmigen Vorformling geformt, in eine beheizbare Form überführt und dort mit Luft oder einem anderen Gas aufgeblasen, so daß dieser sich an die heiße Wandung der Form anschmiegt und dort vulkanisiert. Geeignete Apparate sind grundsätzlich aus der für die Thermoplasten bekannte Blasformtechnik bekannt.

Die Herstellung des Vorformlings erfolgt beispielsweise mit einem in der Siliconverarbeitung üblicherweise eingesetzten Extruder.

### Der Extruder fördert den Kautschuk

I) durch ein üblicherweise in der Thermoplast- oder der Siliconverarbeitung eingesetztes Extrusionswerkzeug, das mit einer Vorrichtung zur Veränderung der Wanddicke während des Extrudierens ausgestattet sein kann,
   oder
II) durch ein Extrusionswerkzeug, das mit einer Vorrichtung zur Veränderung der Wanddicke während des Extrudierens ausgestattet sein kann, und das mehr als einen Siliconkautschuk zu einem einzigen Vorformling coextrudieren kann. Mit dieser Technik ist es beispielsweise möglich, zwei Materialien mit unterschiedlichen Eigenschaften zu einem Formteil zu verarbeiten,
   oder
III) in ein dafür vorgesehenes Speichervolumen, aus dem der Kautschuk durch eine mechanisch, elektrisch oder hydraulisch betriebene Vorrichtung durch ein Extrusionswerkzeug wie unter I) und II) beschrieben extrudiert wird.

In einer bevorzugten Ausführungsform des erfindungsgemäßen Verfahrens wird der in Vorformling in Form eines Schlauches in die Form eingebracht und dort mit Luft oder einem anderen geeigneten Gas aufgeblasen, so daß er sich an die heiße Wandung der Form anschmiegt und dort vulkanisiert. Nach diesem Verfahren können sowohl einseitig offene als auch vollkommen geschlossene Hohlkörper hergestellt werden. Dabei wird ein Gas, vorzugsweise Luft, durch eine Gaseinleitungsvorrichtung in den Vorformling geleitet, die entweder durch eine offene Seite des Vorformlings in dessen Innenraum ragt, oder welche die Wandung des allseits geschlossenen Vorformlings durchstößt. Bei der Herstellung vollkommen geschlossener Hohlkörper wird der Vorformling an einem Ende an einer Gaseinleitungsvorrichtung angeschlossen, die in das noch offene Ende des Vorformlings ragt über die Luft oder ein anderes Gas eingeblasen wird. Beim anschließenden Verschließen des noch offenen Endes wird Gasvolumen im Vorformling eingeschlossen, das den Kontakt zur heißen Wandung bewirkt.

In der bevorzugten Ausführungsform der vorliegenden Erfindung erfolgt die Formgebung des Vorformlings durch einen Überdruck auf der formabgewandten Seite des Vorformlings. In einer weiteren Ausführungsform des erfindungsgemäßen Verfahrens erfolgt die Formgebung des Vorformlings mittels Unterdruck auf der formzugewandten Seite des Vorformlings. Der Unterdruck wird erzeugt, indem man die Luft, die sich zwischen dem in die Blasform überführten Vorformlings und der Wandung der Form befindet, durch mindestens eine Öffnung absaugt, so daß der gegenüber dem Innenraum des Schlauches entstehende Unterdruck, das Aufweiten des Vorformlings sowie das Anschmiegen an die Wandung der Blasform bewirkt.

In dem erfindungsgemäßen Verfahren erfolgt die Vulkanisation vorzugsweise an der beheizten Form, an der der Siliconkautschuk anliegt.

Gegenstand der vorliegenden Erfindung ist auch ein Verfahren zur Herstellung von Formteilen mit starken Hinterschnitten unter Einsatz eines Vorformlings aus Siliconkautschuk oder einem Gemisch aus mehreren Siliconkautschuken, wobei der Vorformling in Form einer Folie oder Platte in die Form eingebracht und nach der Methode der Tiefziehtechnik weiterverarbeitet wird.

Bei der Übertragung der aus der Thermoplastverarbeitung bewährten Tiefziehtechnik auf Silicone werden die bei der Blasformtechnik beschriebenen Silicon-Kautschuk-Mischungen mit den Komponenten (A) bis (D) verwendet.

Mittels Extruder wird bei der Tiefziehtechnik eine Platte oder Folie extrudiert und entweder über einen Überdruck auf der formabgewandten Seide des Vorformlings oder mittels Vakuum auf der formzugewandten Seite aufgebracht. Bei der Vakuumtechnik sind kleine Bohrungen oder Schlitze in Werkzeug notwendig. Der Kontakt des Vorformlings zum heißen Werkzeug bewirkt die Vulkanisation.

Nach Beendigung der Vulkanisation wird der Artikel entformt.

Die Erfindung wird anhand des folgenden Beispiels erläutert:

### Ausführungsbeispiel:

Ein Silicon-Kautschuk mit einer Mooney-Viskosität von 50 (zu Anfang der Messung), bestehend aus
- 100 Tln.: Polydimethylsiloxan mit seiten- und endständigen Vinylgruppen, mit einem Vinylgehalt von 0,025 mMol/g und einem mittleren Molekulargewicht von ca. 300.000 (Viskosität 15000 bis 25000 Pa.s)
- 29 Tln.: pyrogener Kieselsäure mit einer spezifischen Oberfläche von 150m²/g
- 3 Tln.: eines kurzkettigen, hydroxylendgestoppten Polymethylphenylsiloxans, mit einer Viskosität von 700 bis 1300 mPa.s
- 0,8 Tln.: Bis(2,4-dichlorbenzoyl)peroxid
- 0,8 Tln.: eines Polydimethylsiloxans mit einem mittleren Molekulargewicht von etwa 25.000 (Viskosität 0,8 bis 1,2 Pa.s)

wird folgendermaßen zu flaschenförmigen Hohlkörpern mit einem Volumen von 1 l und einer Höhe von etwa 230 mm verarbeitet. Der Extruder ist mit einer Förderschnecke vom Durchmesser 30 mm und einer Länge, die ein 19faches des Durchmessers darstellt, ausgerüstet. Die Temperatur des Extruderzylinders beträgt ca. 20°C. Der Extruder fördert den Kautschuk durch einen handelsüblichen Umlenkkopf einer Extrusionsblasanlage, der mit einer Vorrichtung zur Veränderung der Wanddicke des Extrudates ausgerüstet ist. Dabei entsteht am Eintritt des Kautschuks in den Extrusionsblaskopf, je nach der eingestellten Spaltweite des Düsenwerkzeuges, ein Druck von 300-600 bar. Der schlauchförmige Vorformling hat einen Durchmesser von ca. 45 mm und eine Wanddicke von ca. 5 mm. Nachdem ein ausreichend langer Vorformling in Form eines Schlauches extrudiert worden ist, werden die zwei Hälften einer Form geschlossen, wobei der Schlauch in der Form zentrisch positioniert ist. Durch Zusammendrücken der Form wird der Vorformling an einem Ende fest verschlossen.

Die Wandung des Werkzeughohlraumes weist dabei eine konstante Temperatur von 130°C auf.

Durch das obere, offene Ende des Schlauches wird Druckluft eingeblasen, wodurch sich der Vorformling aufweitet, bis er die heiße Wandung des achteckigen Werkzeughohlraumes mit einer lichten Weite von ca. 80 bis 90 mm berührt, d.h. die Kontur der Form annimmt. Nach 120 Sekunden wird die Form geöffnet und der vulkanisierte Hohlkörper entnommen.

## Patentansprüche

1. Verfahren zur Herstellung von Hohlkörpern oder Formteilen mit starken Hinterschnitten aus Kunststoff, das folgende nacheinander ablaufende Schritte umfaßt:
Herstellung eines Vorformlings,
Überführen des Vorformlings in eine Form zur Festlegung der Geometrie,
Formgebung des Formkörpers durch Anpressen oder gegebenenfalls Ansaugen des Vorformlings an die Form durch Gasdruck und
Vulkanisation,
dadurch gekennzeichnet, daß als Kunststoff ein Siliconkautschuk eingesetzt wird.

2. Verfahren nach Anspruch 1, dadurch gekennzeichnet, daß als Siliconkautschuk peroxidisch oder additionsvernetzende Silicon-Kautschuke eingesetzt werden.

3. Verfahren nach den Ansprüchen 1und 2, dadurch gekennzeichnet, daß als Siliconkautschuk ein peroxidisch vernetzender Siliconkautschuk mit einer Mooney-Viskosität von 30 bis 130 bei 20°, enthaltend
A) 100 Teile eines Silicon-Polymeren oder eines Gemisches aus mehreren Silicon-Polymeren der allgemeinen Formel 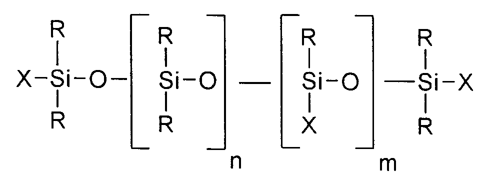 mit R = C₁-C₈-Alkyl, C₅-C₈-Cycloalkyl, C₆-C₁₄-Aryl, wobei die Reste R gleich oder verschieden sein können, X die Bedeutung von R oder eines Alkenylrestes mit 2 bis 6 C-Atomen hat, mit einer Viskosität von 10 bis 1.000.000 Pa.s, wobei mindestens 2 Alkenylgruppen im Molekül vorhanden sind,
B) 20 bis 200 Teile eines verstärkenden Füllstoffs oder eines Gemisches aus mehreren verstärkenden Füllstoffen
C) 0,1 bis 7 Teilen eines organischen Peroxids
D) 0 bis 100 Teilen eines verstärkenden Füllstoffs oder eines Gemisches aus mehreren nicht verstärkenden Füllstoffen und gegebenenfalls einem farbgebenden Pigment, eingesetzt.

4. Verfahren nach den Ansprüchen 1 und 2, dadurch gekennzeichnet, daß als Siliconkautschuk ein additionsvernetzender Siliconkautschuk mit einer Mooney-Viskosität von 30 bis 130 bei 20°C, enthaltend
A) 100 Teile eines Silicon Polymeren oder eines Gemisches aus mehreren Silicon-Polymeren der allgemeinen Formel 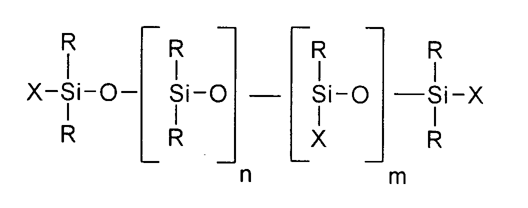 mit R = C₁-C₈-Alkyl, C₅-C₈-Cycloalkyl, C₆-C₁₄-Aryl, wobei die Reste R gleich oder verschieden sein können, X die Bedeutung von R oder eines Alkenylrestes mit 2 bis 6 C-Atomen hat, mit einer Viskosität von 10 bis 1.000.000 Pa·s, wobei mindestens 2 Alkenylgruppen im Molekül vorhanden sind,
B) 20 bis 200 Teile eines verstärkenden Füllstoffes oder eines Gemisches aus mehreren verstärkenden Füllstoffen
C') 0,1 bis 30 Teilen eines Si-H-Gruppen-haltigen Vernetzers der allgemeinen Formel 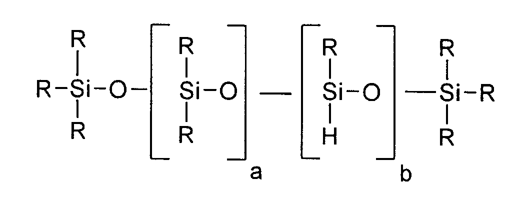 mit R = C₁-C₈-Alkyl, C₂-C₈-Cycloalkyl, C₆-C₁₄-Aryl, C₂-C₈-Alkenyl, die Reste R gleich oder verschieden sein können, wobei a zwischen 0 und 400 und b zwischen 3 und 400 liegt,
einen Edelmetallkatalysator, wobei die Konzentration, bezogen auf die Summe aller Komponenten, 1 bis 100 ppm beträgt
0,001 bis 1,0 Teilen eines Inhibitors, der die katalysierte Addition der SiH-Gruppen an die Alkenylgruppen des Siliconpolymers bei Raumtemperatur aber nicht bei höheren Temperaturen verhindert,
D) 0 - 100 Teilen eines nicht verstärkenden Füllstoffes oder eines Gemisches aus mehreren nicht verstärkenden Füllstoffen und gegebenenfalls einem farbgebenden Pigment.

5. Verfahren nach den Ansprüchen 1 bis 4, dadurch gekennzeichnet, daß der Vorformling in Form eines Schlauches in die Form eingebracht wird.

6. Verfahren zur Herstellung von Formteilen mit starken Hinterschnitten unter Einsatz eines Vorformlings aus Siliconkautschuk oder eines Gemisches aus mehreren Siliconkautschuken nach einem der Ansprüche 2 bis 4, dadurch gekennzeichnet, daß der Vorformling in Form einer Folie oder Platte die Form eingebracht und nach der Methode derr Tiefziehtechnik verarbeitet wird.

7. Verfahren nach den Ansprüchen 1 bis 6, dadurch gekennzeichnet, daß die Formgebung des Vorformlings durch einen Überdruck auf der formabgewandten Seite des Vorformlings erfolgt.

8. Verfahren nach den Ansprüchen 1 bis 7, dadurch gekennzeichnet, daß die Formgebung des Vorformlings mittels Unterdruck auf der formzugewandten Seite des Vorformlings erfolgt.

9. Verfahren nach den Ansprüche 1 bis 8, dadurch gekennzeichnet, daß die Vulkanisation an der beheizten Form, an der der Siliconkautschuk anliegt, erfolgt.
